# EUROPÄISCHE PATENTSCHRIFT

(11) **EP 0 582 031 B1**
(45) Veröffentlichungstag und Bekanntmachung des Hinweises auf die Patenterteilung: **03.12.1997**
(21) Anmeldenummer: 93102797.3
(22) Anmeldetag: 23.02.1993
(51) Int. Cl.: F24D 3/14, F24D 5/10

(54) **Vorrichtung zur Aufnahme von heizungs- und/oder lüftungstechnischen Elementen**
Device for receiving heating or ventilation elements
Dispositif servant à contenir des éléments de chauffage et/ou de ventilation

(30) Priorität: 06.08.1992 DE 4225945
(43) Veröffentlichungstag der Anmeldung: 09.02.1994
(73) Patentinhaber: Herrmann Wärmesysteme GmbH, 58239 Schwerte (DE)
(72) Erfinder: Herrmann, Klaus, W-5840 Schwerte-Geisecke (DE); Krämer, Thomas, W-6962 Adelsheim (DE); Fieback, Klaus, Dr.-Ing., O-1156 Berlin (DE)
(74) Vertreter: Patentanwälte Meinke, Dabringhaus und Partner

(56) Entgegenhaltungen:
- CH-A- 608 596
- DE-A- 2 521 374
- DE-A- 3 818 809

## Beschreibung

Die Erfindung betrifft eine Vorrichtung zur gleichzeitigen, gemeinsamen Aufnahme von heizungs- und/oder lüftungstechnischen Elementen oder dergl., wie von Rohrleitungen, elektrischen Leitungen, Luftheizungselementen, Wärmedämmelementen, Schalldämmelementen, Fußbodenheizungselementen, zur Anordnung in einer inneren bzw. äußeren Gebäudeumfassungskonstruktion, insbesondere in Dach-, Wand- und Deckenelementen sowie in Fußbodenflächen mit wenigstens einem plattenförmigen Profilelement, welches mit einer Vielzahl von einseitig angeordneten sickenförmigen Noppen mit Verbindungsmitteln für die Verbindung mit einem entsprechend ausgebildeten weiteren Profilelement versehen ist.

Eine solche Vorrichtung ist aus DE-A-2 521 374 bekannt. Diese Druckschrift beschreibt eine Vorrichtung mit Profilelementplatten, die zur Bildung von kanalförmigen Freiräumen zwischen den Platten derart übereinander angeordnet werden, daß die Noppen der plattenförmigen Profilelemente sich gegenüberliegen und stirnseitig aneinanderstoßen. Dabei können die Noppen zur Befestigung der Profilelemente aneinander wenigstens teilweise druckknopfförmig ausgestaltet sein, derart, daß einige Noppen der einen Profilelementplatte in entsprechend gestaltete Noppen der anderen Profilelementplatte einrasten. In Ausgestaltung kann aber auch vorgesehen sein, daß die Platten mit sich stirnseitig berührenden Noppen einfach gegeneinander angeordnet sind, ohne eine Arretierung vorzusehen.

Mit einer solchen Lösung ist es zwar möglich, kanalförmige Freiräume in Fußbodenflächen oder dergl. zum Verlegen von Leitungen oder dergl. zur Verfügung zu stellen, allerdings müssen, insbesondere wenn die Vorrichtung im Fußbodenbereich verwandt werden soll, die Profilelementplatten eine ausreichende Tragfähigkeit besitzen, was dazu führt, daß die Profilelementplatten eine ausreichend große Festigkeit und damit Materialstärke aufweisen müssen.

Demgegenüber ist es Aufgabe der Erfindung, eine universell einsetzbare Vorrichtung zu schaffen, die mit nur einem Element bzw. mit der Zusammenführung mehrerer derartiger Elemente örtlich und zeitlich unterschiedliche Anforderungen zur kombinierten Fußbodenheizung, Luftheizung, Lufttransport, Wärme- und Schalldämmung, Solarabsorption und dergl. erfüllen kann, wobei die Vorrichtung möglichst materialsparend, aber dennoch stabil ausgeführt sein soll.

Diese Aufgabe wird mit einer Vorrichtung der eingangs bezeichneten Art dadurch gelöst, daß zwei Profilelemente bereichsweise übereinandergestülpt angeordnet sind, derart, daß die Noppen des oberen Profilelementes über die des unteren Profilelementes gepreßt sind und als Verbindungsmittel dienende stiftförmige Vertiefungen des oberen Profilelementes arretierend in die stiftförmigen Vertiefungen des unteren Profilelementes eingreifen.

Aufgrund der Ausbildung und Anordnung der plattenförmigen Profilelemente können diese quasi schnappend übereinandergestülpt werden, so daß sich ein ausgesprochen fester Verbund zwischen den Profilelementplatten ergibt. Es können dadurch sehr dünnwandige flexible Profilelementplatten eingesetzt werden, die sich zur materialsparenden, stabilen, wieder lösbaren Verbundkonstruktion zusammensetzen lassen. Die Herstellung dieser Profilelementplatten ist ausgesprochen einfach, da alle Profilelementplatten gleich ausgestaltet sind, da sämtliche sickenförmigen Noppen gleichartig und gleich groß ausgebildet sind. Zur Befestigung der Profilelementplatten aneinander sind keine weiteren zusätzlichen Maßnahmen oder Befestigungselemente erforderlich, lediglich die sickenförmigen Noppen sind übereinanderzustülpen und schnappen dann arretierend ineinander.

Für eine besonders gute Befestigung bzw. Arretierung einzelner Profilelemente zu einem gemeinsamen Verbundkörper ist vorteilhaft vorgesehen, daß die stiftförmigen Vertiefungen mit wenigstens einer umlaufenden Arretierungsausbuchtung versehen sind. Es steht dann gleichsam eine Art Druckknopfverbindung zur Verfügung, die jeweils zugeordneten Noppen zweier übereinander angeordneter Profilelemente lassen sich auf einfache Weise entweder direkt oder mit einem zusätzlichen Verbindungselement miteinander verbinden und ggf. auch leicht wieder demontieren.

Eine besonders vorteilhafte weitere Ausgestaltung der Erfindung zeichnet sich dadurch aus, daß zwischen den jeweils einander zugeordneten Noppen der beiden Profilelemente ein arretierend in die Vertiefungen eingreifender Distanzstift angeordnet ist. Es ist dann auf einfache Weise möglich, Verbundlösungen mit Distanzelementen zwischen den einzelnen Schichten (Profilelementen) zu verwirklichen.

In vorteilhafter Ausgestaltung der Erfindung ist weiterhin vorgesehen, daß die Profilelemente aus dünnwandigem Material bestehen und/oder auf der Unterseite mit einer Armierung aus Metallgaze und/oder Glasfaser versehen sind. Dabei muß das dünnwandige Material entsprechend eine Mindestelastizität für das Zusammenfügen bzw. Übereinanderstülpen der Noppen aufweisen. Beispiele hierfür sind tiefgezogene Bleche bzw. thermisch geformte Kunststoffe. Die Armierung ermöglicht bedarfsweise eine größere Steifigkeit der Elemente bei Beibehaltung der Elastizität.

Erkennbar ist die erfindungsgemäße Vorrichtung leicht montier- bzw. demontierbar. Die Struktur der Profilelemente ermöglicht eine gute formschlüssige Einbindung in Beton. Dies ist wesentlich für die Gewährleistung der niedrigen Schallbelastung in Räumen, insbesondere dann, wenn über die von den Platten gebildeten Kanäle Luft transportiert wird. Eine formschlüssige Abdeckung bestimmter Kanalbereiche mit abnehmbaren Abdeckplatten ist einfach realisierbar. Dies ermöglicht eine einfache Wartung (Auswechslung) von Lufttransportschläuchen, die nachträgliche Installation weiterer Elemente, wie Rohre, Leitungen usw. in diesen Bereichen.

Weitere Vorteile und Ausgestaltungen ergeben sich aus der nachfolgenden beispielsweisen Erläuterung der Erfindung anhand der Zeichnung. Diese zeigt in:
- Fig. 1: eine erfindungsgemäße Vorrichtung mit einem einzelnen Profilelement in Seitenansicht,
- Fig. 2: die Vorrichtung nach Fig. 1 in Draufsicht,
- Fig. 3: ein vergrößertes Detail der Vorrichtung nach Fig. 1,
- Fig. 4: in Seitenansicht einen Verbundkörper mit zwei übereinander angeordneten Profilelementen in einer anderen Ausführungsform und
- Fig. 5: ebenfalls eine als Verbundkörper ausgebildete Vorrichtung mit übereinander, auf Abstand angeordneten Profilelementen.

Eine erfindungsgemäße Vorrichtung zur gleichzeitigen, gemeinsamen Aufnahme von heizungs- und/oder lüftungstechnischen Elementen zur Anordnung in einer inneren bzw. äußeren Gebäudeumfassungskonstruktion ist je nach Einsatzfall aus einzelnen oder mehreren plattenförmigen gleichen Profilelementen aufgebaut, ein solches Profilelement ist mit 1 bezeichnet. Dieses Profilelement 1 weist vorzugsweise gleichmäßig über das gesamte Profilelement verteilte, gleiche, als sickenförmige Noppen 2 ausgebildete Vorsprünge auf, derart, daß das Profilelement 1 einseitig mit den vorstehenden Noppen 2 und auf der anderen Seite mit den durch die Noppen 2 gebildeten Vertiefungen versehen ist.

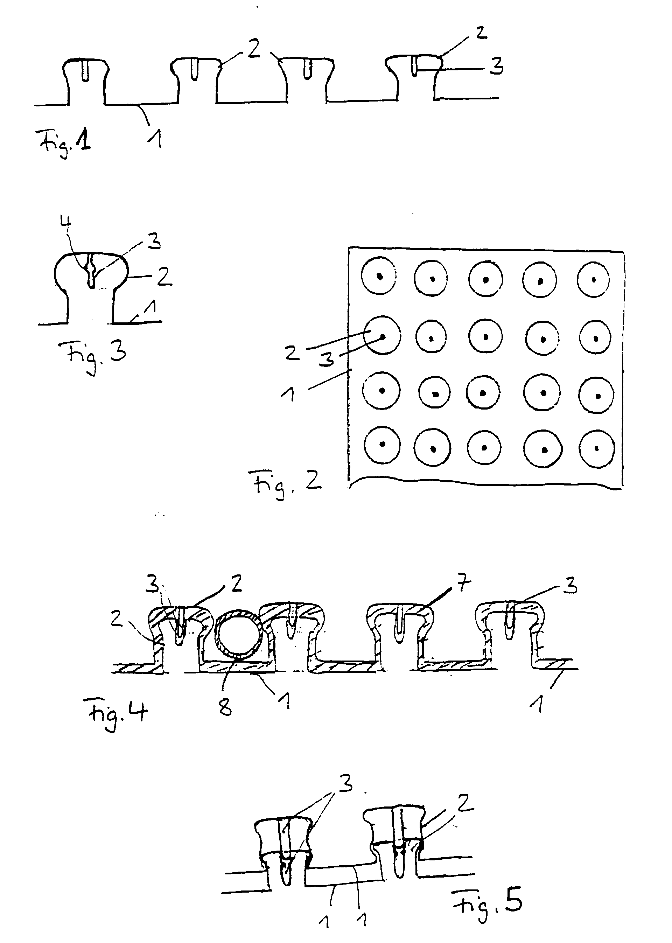

Diese Noppen 2 dienen einerseits als Stabilitätselemente und zur Ausbildung von Hohlräumen zwischen den Noppen zur Verlegung von Leitungen oder Bildung von Kanälen, andererseits dienen sie aber auch zur Verbindung mit einem weiteren Profilelement 1 zur Bildung eines Verbundkörpers. Dazu weist jede Noppe 2 Verbindungsmittel auf, die bevorzugt als stiftförmige Vertiefung 3 im Zentrum der Noppen 2 ausgebildet sind. Diese endseitig offene oder geschlossene, stiftförmige Vertiefung 3 ist am besten in Fig. 3 erkennbar. Jede stiftförmige Vertiefung 3 ist mit wenigstens einer umlaufenden Arretierausbuchtung 4 versehen, die mit einem in die stiftförmige Vertiefung 3 einzufügenden stiftförmigen Verbindungselement zusammenwirkt, das entsprechend mit einer umlaufenden Wulst versehen ist, welche arretierend in die Ausbuchtung 4 eingreift. Die Ausbildung dieses Verbindungselementes hängt dann jeweils von der Anordnung der einzelnen Profilelemente 1 zur Bildung eines Verbundkörpers ab. Die Profilelemente 1 bestehen bevorzugt aus dünnwandigem Material mit einer Mindestelastizität für ein Zusammenfügen. Beispiele hierfür sind tiefgezogene Bleche bzw. thermisch geformte Kunststoffplatten.

In der Ausgestaltung nach Fig. 4 ist ein Verbundkörper gezeigt, bei dem zwei Profilelemente 1 übereinander gestülpt angeordnet sind, derart, daß die Noppen 2 des oberen Profilelementes 1 über die Noppen 2 des unteren Profilelementes 1 gepreßt sind, wozu ein entsprechend flexibles Material der Profilelemente 1 eingesetzt wird. Dabei dienen die stiftförmigen Vertiefungen 3 des oberen Profilelementes 1 als Arretierungselemente, da sie entsprechend arretierend in die stiftförmigen Vertiefungen 3 des unteren Profilelementes 2 eingreifen. Dieser Verbundkörper eignet sich beispielsweise für kombinierte Fußboden- und Luftheizungen. Dabei bestehen zwischen den beiden Profilelementen nur schmale Hohlräume, die beispielsweise als Luftkanal 7 dienen, während zwischen den Noppen 2 des oberen Profilelementes Rohre 8 verlegt werden können.

Fig. 5 zeigt eine Ausführungsform eines Verbundkörpers, der dem Verbundkörper nach Fig. 4 ähnelt, allerdings sind hier die Profilelemente 1 auf Abstand voneinander angeordnet. Dazu können zusätzliche Distanzstifte vorgesehen sein oder die Noppen 2 des oberen Profilelementes 1 sind entsprechend nicht vollständig über die Noppen 2 des unteren Profilelementes 1 gepreßt.

Erkennbar sind mittels der erfindungsgemäßen Vorrichtung, die im wesentlichen aus einem oder mehreren der in Fig. 1 dargestellten Grundprofilelemente 1 besteht, eine Vielzahl unterschiedlicher Kombinationsmöglichkeiten gegeben, ohne daß dazu eine Veränderung der Profilelemente 1 vorgenommen werden muß. Dabei ist die Erstellung derartiger Verbundkörper leicht durchzuführen und es ist auch eine leichte Demontierbarkeit gegeben, wenn nachträglich Elemente verlegt werden müssen bzw. ausgetauscht werden sollen. Die Struktur der Profilelemente 1 ermöglicht darüber hinaus eine gute formschlüssige Einbindung in Beton, was besonders wesentlich ist zur Gewährleistung niedriger Schallbelastung in Räumen, insbesondere dann, wenn über die Kanäle zwischen den Noppen Luft transportiert werden soll. Es ist auch möglich, nach oben offene Profilelemente 1 (Fig. 4) mit zusätzlichen Abdeckplatten formschlüssig abzudecken, was zeichnerisch nicht dargestellt ist. Darüber hinaus sind eine Vielzahl weiterer Ausgestaltungen möglich, wobei jeweils nur entsprechend ausgebildete Profilelemente 1 benötigt werden.

## Patentansprüche

1. Vorrichtung zur gleichzeitigen gemeinsamen Aufnahme von heizungs- und/oder lüftungstechnischen Elementen oder dgl., wie von Rohrleitungen, elektrischen Leitungen, Luftheizungselementen, Wärmedämmelementen, Schalldämmelementen, Fußbodenheizungselementen, zur Anordnung in einer inneren bzw. äußeren Gebäudeumfassungskonstruktion, insbesondere in Dach-, Wand- und Deckenelementen sowie in Fußbodenflächen, mit wenigstens einem plattenförmigen Profilelement (1), welches mit einer Vielzahl von einseitig angeordneten sickenförmigen Noppen (2) mit Verbindungsmitteln für die Verbindung mit einem entsprechend ausgebildeten weiteren Profilelement (1) versehen ist, dadurch gekennzeichnet,
daß zwei Profilelemente (1) bereichsweise übereinandergestülpt angeordnet sind, derart, daß die Noppen (2) des oberen Profilelementes (1) über die des unteren Profilelementes (1) gepreßt sind und als Verbindungsmittel dienende stiftförmige Vertiefungen (3) des oberen Profilelementes (1) arretierend in die stiftförmigen Vertiefungen (3) des unteren Profilelementes (1) eingreifen.

2. Vorrichtung nach Anspruch 1,
dadurch gekennzeichnet,
daß die stiftförmigen Vertiefungen (3) mit wenigstens einer umlaufenden Arretierungsausbuchtung (4) versehen sind.

3. Vorrichtung nach Anspruch 1 oder 2,
dadurch gekennzeichnet,
daß zwischen den jeweils einander zugeordneten Noppen (2) der beiden Profilelemente (1) ein arretierend in die Vertiefungen (3) eingreifender Distanzstift angeordnet ist.

4. Vorrichtung nach Anspruch 1 oder einem der folgenden,
dadurch gekennzeichnet,
daß die Profilelemente (1) aus dünnwandigem Material bestehen und/oder auf der Unterseite mit einer Armierung aus Metallgaze und/oder Glasfaser versehen sind.

## Claims

1. Apparatus for simultaneously jointly receiving heating- and/or ventilation-engineering elements or the like such as conduits, electric lines, air heating elements, heat insulating elements, sound insulating elements, floor heating elements, for arrangement in an inner or outer building enclosure structure, in particular in roof, wall and ceiling elements and in floor surfaces, with at least one plate-shaped profile element (1) which is provided with a plurality of corrugation-like knobs (2) arranged on one side with connecting means for connection to a further profile element (1) of a corresponding configuration, characterised in that two profile elements (1) are arranged in mutually superposed relationship in region-wise manner in such a way that the knobs (2) of the upper profile element (1) are pressed over those of the lower profile element (1) and peg-shaped depressions (3) in the upper profile element (1), which serve as connecting means, engage arrestingly into the peg-shaped depressions (3) in the lower profile element (1).

2. Apparatus according to claim 1 characterised in that the peg-shaped depressions (3) are provided with at least one peripherally extending arresting bulge portion (4).

3. Apparatus according to claim 1 or claim 2 characterised in that disposed between the respectively mutually associated knobs (2) of the two profile elements (1) is a spacer pin which engages arrestingly into the depressions (3).

4. Apparatus according to claim 1 or one of the following claims characterised in that the profile elements (1) comprise thin-gauge material and/or are provided on the underside with a reinforcement of metal gauze and/or glass fibre.

## Revendications

1. Dispositif pour la réception conjointe et simultanée d'éléments de chauffage et/ou de ventilation ou éléments similaires tels que des conduits tubulaires, des conducteurs électriques, des éléments de chauffage par circulation d'air, des éléments d'isolation thermique, des éléments d'isolation acoustique, des éléments de chauffage par le sol, en vue de l'implantation dans un ouvrage d'enceinte respectivement intérieur ou extérieur d'un bâtiment, notamment dans des éléments de toiture, de cloisonnement et de recouvrement, ainsi que dans des surfaces de planchers, comportant au moins un élément profilé (1) en forme de plaque, muni d'un grand nombre de protubérances (2) en forme de moulures disposées d'un côté, avec des moyens de liaison pour la liaison avec un élément profilé (1) supplémentaire, de réalisation correspondante,
caractérisé par le fait
que deux éléments profilés (1) sont enfilés l'un sur l'autre par zones, de façon telle que les protubérances (2) de l'élément profilé (1) supérieur soient pressées sur celles de l'élément profilé (1) inférieur, et que des creusures longilignes (3) de l'élément profilé (1) supérieur, servant de moyens de liaison, pénètrent avec effet d'arrêt dans les creusures longilignes (3) de l'élément profilé (1) inférieur.

2. Dispositif selon la revendication 1,
caractérisé par le fait
que les creusures longilignes (3) sont pourvues d'au moins un évasement périphérique d'arrêt (4).

3. Dispositif selon la revendication 1 ou 2,
caractérisé par le fait
qu'une cheville d'espacement, pénétrant avec effet d'arrêt dans les creusures (3), est interposée entre les protubérances (2) des deux éléments profilés (1) qui sont respectivement associées.

4. Dispositif selon la revendication 1 ou l'une des suivantes,
caractérisé par le fait
que les éléments profilés (1) consistent en un matériau a paroi mince et/ou sont munis, à la face inférieure, d'une armature en gaze métallique et/ou en fibre de verre.
